# EUROPÄISCHE PATENTSCHRIFT

(11) **EP 3 916 277 B1**
(45) Veröffentlichungstag und Bekanntmachung des Hinweises auf die Patenterteilung: **03.04.2024**
(21) Anmeldenummer: 21174340.6
(22) Anmeldetag: 18.05.2021
(51) Int. Cl.: F04B 53/10, F04B 53/16, F16K 15/04, F16K 15/06, F16K 27/02, B60T 8/40

(54) **SEPARATER VENTILSITZ**
SEPARATE VALVE SEAT
SIÈGE DE SOUPAPE SÉPARÉ

(30) Priorität: 26.05.2020 DE 102020114107
(43) Veröffentlichungstag der Anmeldung: 01.12.2021
(73) Patentinhaber: Schwäbische Hüttenwerke Automotive GmbH, 73433 Aalen (DE)
(72) Erfinder: Krohmer, Alexander, 88276 Berg-Weiler (DE)
(74) Vertreter: SSM Sandmair

(56) Entgegenhaltungen:
- DE-A1-102009 054 501
- DE-A1-102015 016 299
- FR-A1- 3 050 780
- US-A- 3 373 695
- US-A- 3 801 234
- US-A- 3 870 439
- US-A- 4 277 229
- US-A- 5 171 136
- US-B1- 6 332 761

## Beschreibung

Die Erfindung betrifft eine Vorrichtung mit einer Ventilanordnung, welche angepasst ist, eine Fluidströmung zuzulassen bzw. zu blockieren. Insbesondere kann die Ventilanordnung angepasst sein, eine Fluidströmung in eine erste Richtung, insbesondere Fließrichtung, zuzulassen, und in eine zweite, der ersten Richtung entgegensetzte Richtung, insbesondere Fließrichtung, zu blockieren. Die Ventilanordnung kann als Rückschlagventil ausgebildet sein oder zumindest als Rückschlagventil wirken. Die Ventilanordnung kann für die Verwendung oder den Einbau in eine Förderpumpe angepasst sein. Mithin betrifft die Erfindung auch eine Vorrichtung mit einer Pumpe oder Förderpumpe, welche eine solche Ventilanordnung umfasst. Die Pumpe kann beispielsweise eine Öl- oder Kraftstoffpumpe sein. Die Pumpe kann beispielsweise einen Hydromotor oder ein Getriebe, wie z. B. ein Fahrzeuggetriebe oder ein Getriebe eines Kraftfahrzeugs, mit Fluid versorgen, insbesondere zur Schmierung und/oder Kühlung und/oder Betätigung von Komponenten des Getriebes. Sie kann beispielsweise mit dem Getriebe eine Getriebeeinheit bilden oder an einem Getriebe befestigt sein oder zumindest strömungstechnisch, insbesondere fluidkommunizierend, mit dem Getriebe verbunden sein. Grundsätzlich kann mit der Pumpe ein Verbrennungsmotor, insbesondere ein Verbrennungsmotor eines Kraftfahrzeugs, mit Fluid versorgt werden, insbesondere zur Schmierung und/oder Kühlung. Die Pumpe kann Teil einer Pumpe-Motor-Einheit sein. Die Pumpe-Motor-Einheit kann beispielsweise einen Elektromotor zum Antrieb der Pumpe umfassen. Alternativ kann die Pumpe durch einen anderen Motor als einen Elektromotor, wie z. B. einen Verbrennungsmotor, insbesondere eines Fahrzeugs oder Kraftfahrzeugs, antreibbar sein. Die Pumpe kann hierzu mechanisch mit dem Verbrennungsmotor gekoppelt sein, wie z. B. über eine Kette oder einen Riemen, über die oder den eine Drehung einer Kurbelwelle auf die Pumpe übertragbar ist. Im Fall einer Pumpe-Motor-Einheit mit einem Elektromotor können die Pumpe und der Elektromotor zusammen eine Einheit bilden, die als Einheit handhabbar und/oder an weiteren Komponenten, wie z. B. an dem genannten Getriebe, befestigt sein kann.

An der Pumpe kann beispielsweise eine weitere Pumpe, insbesondere eine Hilfspumpe angeordnet oder befestigt sein, so dass die Vorrichtung die Pumpe und die Hilfspumpe aufweisen kann. Diese Einheit aus zwei Pumpen kann beispielsweise mit dem Getriebe eine Getriebeeinheit bilden oder an dem Getriebe befestigt sein oder zumindest strömungstechnisch, insbesondere fluidkommunizierend, mit dem Getriebe verbunden sein. Die Vorrichtung kann daher das Getriebe und die Pumpe oder Pumpen aufweisen.

Die US 3,373,695 A und US 5 171 136 A beschreiben Hochdruckpumpen, die als Kolbenpumpe ausgeführt sind. Fluid strömt über ein Einlassventil in eine Kammer und wird über ein Auslassventil ausgestoßen. Die DE 10 2015 016 299 A1 beschreibt ein Strömungssteuerventil, das als Druckeinstellventil zum Aufrechterhalten eines Drucks in einem Kraftstofftank ausgebildet ist. Die FR 3 050 780 A1 befasst sich mit einem Filtersystem für einen Hydraulikkreislauf mit einem filtrierenden Rückschlagventil.

Der vorliegenden Erfindung liegt die Aufgabe zugrunde, eine Vorrichtung mit einer Ventilanordnung, welche einfach herzustellen und zu montieren ist, zu schaffen.

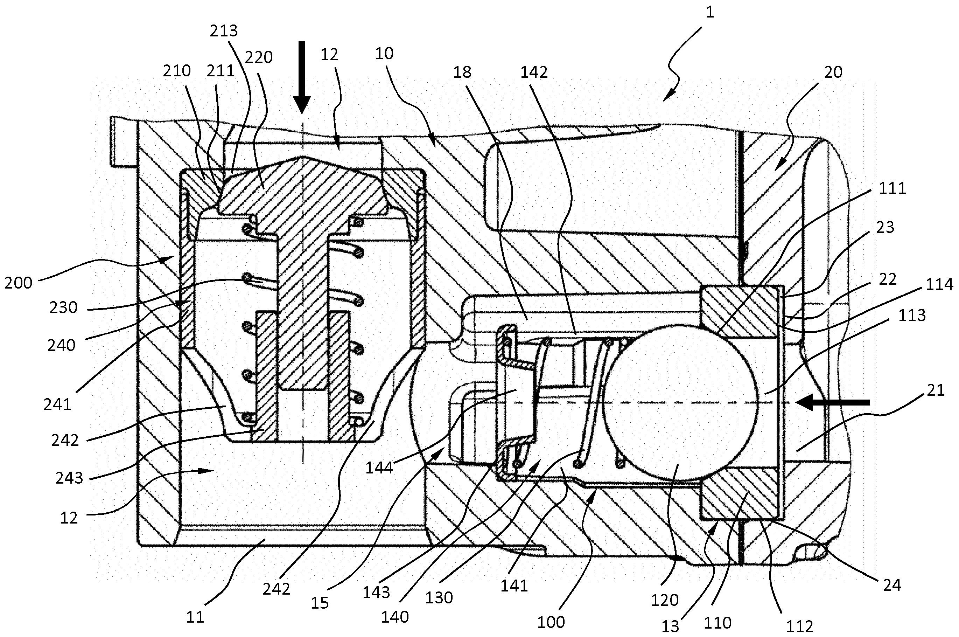

Die Aufgabe wird mit den Merkmalen des Anspruchs 1 gelöst. Vorteilhafte Weiterbildungen ergeben sich aus den abhängigen Ansprüchen, der Beschreibung und der Figur.

Die Erfindung geht von einer Ventilanordnung, insbesondere einer Vorrichtung mit einer solchen Ventilanordnung, aus. Die Ventilanordnung kann beispielsweise ein Rückschlagventil, ein Bypassventil oder ein Überdruckventil sein. Sie ist angepasst, eine Fluidströmung durch die Ventilanordnung oder durch einen Fluidkanal in einem Ventilzustand, insbesondere wenn ein Schließkörper von einem Ventilsitz abgehoben ist, zuzulassen und in einem anderen Ventilzustand, insbesondere wenn der Schließkörper an dem Ventilsitz anliegt, nicht zuzulassen, d.h. zu blockieren. Beispielsweise kann die Ventilanordnung angepasst sein, eine Fluidströmung durch die Ventilanordnung oder durch den Fluidkanal in eine erste Richtung, insbesondere Fließrichtung, zuzulassen und in eine zweite, der ersten Richtung entgegengesetzte Richtung, insbesondere Fließrichtung, zu blockieren. Die erste Richtung kann beispielsweise von einer Pumpen- oder Förderkammer (Druckseite) einer Förderpumpe zu einem Verbraucher oder einer Saugseite (Pumpeingang oder Fluidreservoir) der Förderpumpe weisen. Die zweite Richtung kann beispielsweise von einem Verbraucher oder einer anderen Pumpe, beispielsweise in einem System, welches eine Haupt- und Zusatzpumpe oder Hilfspumpe aufweist, oder von einer Saugseite (Pumpeingang oder Fluidreservoir) einer Pumpe zu der Pumpenkammer weisen.

Beispielsweise kann während des Betriebs der Pumpe Fluid von der Pumpenkammer über den Fluidkanal in die erste Richtung abgefördert werden oder abfließen. Die Ventilanordnung lässt eine Fluidströmung in die erste Richtung zu und in die zweite Richtung nicht zu, um ein Zurückfließen von Fluid in die Pumpenkammer zu verhindern. Durch die Ventilanordnung lässt sich die Pumpe abschalten, wobei der Fluiddruck, der mitunter relativ hohe Werte annehmen kann, in dem Fluidsystem, welches in der ersten Richtung nach der Ventilanordnung angeordnet ist, gehalten wird. Durch die Ventilanordnung kann ein Überdruck vermieden werden, eine Fördermenge bzw. ein Förderdruck begrenzt oder ein (Rück-)Strömen des Fluids zur Druckseite der Pumpe verhindert werden.

Die Ventilanordnung umfasst einen Fluidkanal, einen Ventilsitz und einen in dem Fluidkanal angeordneten, beispielsweise rotationssymmetrischen oder kugelförmigen, Schließkörper. Beispielsweise kann der Schließkörper mit einer translatorischen Bewegung entlang der durch die Ventilanordnung vorgesehenen Fluidströmungsrichtung von dem Ventilsitz abgehoben und/oder gegen den Ventilsitz bewegt werden. Die Ventilanordnung ist konfiguriert, eine Fluidströmung, insbesondere in die zweite Richtung und in die erste Richtung, zu verhindern, wenn der Schließkörper an dem Ventilsitz anliegt, und eine Fluidströmung, insbesondere in die erste Richtung, zuzulassen, wenn der Schließkörper vom Ventilsitz abgehoben ist. Der Schließkörper kann im Betrieb an dem Ventilsitz anliegen und eine Strömung in die zweite Richtung und in die erste Richtung blockieren, wenn eine in die zweite Richtung auf den Schließkörper wirkende Kraft, die sich insbesondere aus dem Druck auf der in die erste Richtung weisenden Seite des Schließkörpers und/oder einer auf den Schließkörper wirkenden Federkraft ergibt, größer ist als eine in die erste Richtung auf den Schließkörper wirkende Kraft, die sich insbesondere aus dem Druck auf der in die zweite Richtung weisenden Seite des Schließkörpers und/oder einer auf den Schließkörper wirkenden Federkraft ergibt. Der Schließkörper kann von dem Ventilsitz, insbesondere mit einer translatorischen Bewegung entlang der Fluidströmungsrichtung, abheben und eine Strömung in die erste Richtung zulassen, wenn die, insbesondere durch den Fluiddruck auf der zweiten Seite des Schließkörpers, in die erste Richtung auf den Schließkörper wirkende Kraft, insbesondere der Druck auf der in die zweite Richtung weisenden Seite des Schließkörpers, größer ist als die, insbesondere durch den Fluiddruck auf der ersten Seite des Schließkörpers, in die zweite Richtung auf den Schließkörper wirkende Kraft, insbesondere der Druck auf der in die erste Richtung weisenden Seite des Schließkörpers, zuzüglich der mit dem Druck auf der in die erste Richtung weisenden Seite des Schließkörpers wirkenden Federkraft, falls eine solche Feder vorhanden ist.

Die Ventilanordnung kann konfiguriert sein, dass, wenn der Schließkörper federbeaufschlagt ist, d. h. mit einer Federkraft gegen den Ventilsitz gespannt wird, der Schließkörper von seinem Ventilsitz erst dann abhebt, wenn der Druckunterschied zwischen den Fluiddrücken auf der ersten und zweiten Seite des Schließkörpers so groß ist, dass die Feder komprimiert wird. D.h. beispielsweise, dass die Ventilanordnung konfiguriert sein kann, dass der Schließkörper von seinem Ventilsitz erst dann abhebt, wenn die durch die Fluiddrücke auf der ersten Seite und der zweiten Seite des Schließkörpers auf den Schließkörper wirkende resultierende Kraft die Vorspannkraft, mit der die Feder den Schließkörper gegen den Ventilsitz drückt, übersteigt. Der Ventilsitz ist von einem in oder an dem Fluidkanal angeordneten, insbesondere separaten Körper, d.h. Ventilsitzkörper, gebildet. Der Körper kann beispielsweise ringförmig sein. Beispielsweise kann der den Ventilsitz bildende Körper an seinem Außenumfang, insbesondere Außenumfangsfläche, von einem Innenumfang, insbesondere Innenumfangsfläche, des Fluidkanals, beispielsweise einer Ventilsitzkörperaufnahme, gehalten werden. Der Körper kann einen sich von seinem ersten Ende zu seinem zweiten Ende erstreckenden Durchgang aufweisen, durch den Fluid durch den Körper hindurch strömen kann.

Der Fluidkanal ist von einem Pumpengehäuse einer ersten Pumpe oder Hauptpumpe, gebildet. Insbesondere kann der Innenumfang des Fluidkanals von dem Gehäuse dieser Pumpe gebildet werden. Der Ventilsitzkörper ist separat zum Gehäuse gebildet. Grundsätzlich ist es aber auch denkbar, dass der Ventilsitzkörper einteilig mit dem Gehäuse oder durch das Gehäuse gebildet ist.

Erfindungsgemäß ragt der den Ventilsitz bildende Körper aus dem Gehäuse und insbesondere dem Fluidkanal, der ersten Pumpe, insbesondere kann er teilweise aus dem Gehäuse und/oder dem Fluidkanal vorstehen. Ein Abschnitt des Körpers kann in dem Gehäuse und/oder dem Fluidkanal angeordnet sein, während ein anderer Abschnitt über das Gehäuse und/oder aus dem Fluidkanal hervorsteht oder aus dem Gehäuse und/oder dem Fluidkanal ragt. Hierdurch lässt sich der Ventilsitz vorteilhaft dazu verwenden, ein Bauteil, welches an dem Gehäuse angeordnet oder befestigt werden soll, an dem oder mittels dem den Ventilsitz bildenden Körper zu zentrieren. Erfindungsgemäß weist die Vorrichtung ein Bauteil auf, welches an dem Gehäuse der ersten Pumpe insbesondere der Hauptpumpe, angeordnet, insbesondere befestigt, ist. Erfindungsgemäß ragt in das Bauteil ein Abschnitt des Körpers, insbesondere der über das Gehäuse und/oder aus dem Fluidkanal ragende Abschnitt, und/oder ist das Bauteil an dem Körper oder mittels des Köpers, insbesondere dem über das Gehäuse und/oder aus dem Fluidkanal ragenden Abschnitt des Körpers, zentriert. Das Bauteil kann beispielsweise ein Deckel der Pumpe oder eine Zwischenplatte oder -gehäuse der Pumpe oder eine zweite Pumpe, insbesondere Hilfs- oder Zusatzpumpe, oder ein zweites Gehäuse, insbesondere ein Gehäuse einer zweiten Pumpe, Hilfspumpe oder Zusatzpumpe, sein.

Insbesondere kann das Bauteil einen Innenumfang, insbesondere eine Innenumfangsfläche, aufweisen, welcher einen Außenumfang, insbesondere eine Außenumfangsfläche, des Körpers umgibt und insbesondere daran zentriert ist. Der Innenumfang des Bauteils kann somit an dem Außenumfang des Körpers anliegen. Optional können der Innenumfang und der Außenumfang Durchmesser aufweisen, die insbesondere in etwa gleich sind oder so aufeinander abgestimmt sind, dass sie ein Passungssystem oder eine Passung, insbesondere Spiel-, Übergangs- oder Presspassung, bilden.

Die Verwendung des den Ventilsitz bildenden Körpers für die Zentrierung des an dem Gehäuse anzubringenden Bauteils bewirkt vorteilhaft die Einsparung eines von dem Körper, welcher den Ventilsitz bildet, separaten Zentrierelements, beispielsweise eines Zentrierstifts oder einer Zentrierhülse, zur lagerichtigen Anordnung des Bauteils an dem Gehäuse.

In Weiterbildungen kann der Außenumfang des Körpers zylindrisch, insbesondere kreiszylindrisch sein. Beispielsweise können der in dem Fluidkanal angeordnete oder gehaltene Abschnitt des Bauteils und der für die Zentrierung des Bauteils vorgesehene Abschnitt des Körpers zylindrisch, insbesondere kreiszylindrisch, sein. Die beiden Abschnitte können den gleichen oder voneinander verschiedene Außendurchmesser aufweisen.

Zusätzlich kann nach einem weiteren Aspekt der Erfindung der Körper reibschlüssig und/oder formschlüssig und/oder stoffschlüssig an dem Innenumfang des Fluidkanals gehalten sein. Vorteilhaft ist es, wenn der Körper in dem Fluidkanal mit einer überwindbaren Haltekraft, die aus einem Reibschluss und/oder Formschluss und/oder Stoffschluss resultiert, gehalten wird. Die reibschlüssige und/oder formschlüssige und/oder stoffschlüssige Verbindung zwischen Körper und Innenumfang des Fluidkanals kann so ausgebildet sein, dass der Körper überwindbar reibschlüssig oder überwindbar formschlüssig oder überwindbar stoffschlüssig an dem Innenumfang des Fluidkanals gehalten ist. Überwindbar heißt insbesondere, dass die Haltekraft der reib-, form- oder stoffschlüssigen Verbindung von einer im Betrieb der Pumpe, insbesondere Haupt- oder Hilfs- oder Zusatzpumpe, auf den Ventilsitzkörper, insbesondere direkt oder indirekt (beispielsweise über den Schließkörper), wirkenden, von dem Fluiddruck in dem Fluidkanal und/oder der Feder bei einem federbeaufschlagten Schließkörper verursachten Kraft, überwunden werden kann, um die formschlüssige oder die reibschlüssige oder die stoffschlüssige Verbindung zu lösen und den Ventilsitzkörper zu verschieben.

Der Ventilsitzkörper kann beispielsweise reibschlüssig oder formschlüssig oder stoffschlüssig so fest an dem Innenumfang gehalten sein, dass er zumindest aufgrund der auf ihn während des Betriebs wirkenden Kräfte relativ zu dem Innenumfang nicht verschiebbar ist. Bevorzugt ist jedoch, dass der Ventilsitzkörper überwindbar reibschlüssig oder überwindbar formschlüssig oder überwindbar stoffschlüssig so fest an dem Innenumfang des Fluidkanals bzw. der Ventilsitzkörperaufnahme gehalten wird, dass er insbesondere durch die während des Betriebs auf den Ventilsitzkörper wirkende Kraft relativ zu dem Innenumfang in die zweite Richtung verschiebbar ist oder verschiebbar sein kann. Das heißt, dass der Ventilsitzkörper in einer Position, in der er an dem Innenumfang, insbesondere reibschlüssig und/oder formschlüssig und/oder stoffschlüssig, gehalten ist, insbesondere translatorisch, in die zweite Richtung verschiebbar ist. Allgemein ist bevorzugt, dass der Ventilsitzkörper relativ zu dem Fluidkanal bewegbar, insbesondere translatorisch verschiebbar ist.

Alternativ oder zusätzlich kann der Ventilsitzkörper aus einer ersten Halteposition, in der er überwindbar reibschlüssig und/oder überwindbar formschlüssig und/oder überwindbar stoffschlüssig an dem Innenumfang des Fluidkanals bzw. der Ventilsitzkörperaufnahme gehalten ist, in die zweite Richtung oder aus der Ventilsitzkörperaufnahme heraus in eine zweite Halteposition, in der eine Bewegung des Ventilsitzkörpers in die zweite Richtung oder aus der Ventilsitzkörperaufnahme heraus blockiert ist, verschiebbar sein. Beispielsweise kann, wenn der Ventilsitzkörper in seiner ersten Halteposition ist, eine Bewegung des Ventilsitzkörpers in die erste Richtung oder in die Ventilsitzkörperaufnahme hinein durch die reibschlüssige oder überwindbar formschlüssige Verbindung zwischen dem Ventilsitzkörper und dem Innenumfang und/oder durch eine nicht-überwindbare formschlüssige Verbindung zwischen Ventilsitzkörper und Fluidkanal, insbesondere dadurch, dass der Fluidkanal eine Anschlag- oder Axialanschlagfläche aufweist, an welcher der Schließkörperhalter in seiner ersten Halteposition anliegt oder anliegen kann, verhindert werden. In der zweiten Halteposition kann der Ventilsitzkörper beispielsweise formschlüssig, insbesondere nicht-überwindbar formschlüssig, an einer Bewegung in die zweite Richtung blockiert sein. Insbesondere kann der Ventilsitzkörper in der zweiten Halteposition reibschlüssig an dem Innenumfang des Fluidkanals und/oder formschlüssig an dem Innenumfang des Fluidkanals oder einem von dem Innenumfang des Fluidkanals separaten Bauteils, beispielsweise von einem Bauteil, an dem sich der Körper in die zweite Richtung abstützt, gehalten werden. Beispielsweise kann der Ventilsitzkörper oder ein Anschlag des Ventilsitzkörpers in der zweiten Halteposition an einem separaten Bauteil oder einem (Translations-)Anschlag des Bauteils, insbesondere axial, anliegen, welches separat von dem Bauteil, insbesondere dem Pumpengehäuse, ist, welches den Fluidkanal bzw. die Ventilsitzkörperaufnahme bildet. Wenn der Ventilsitzkörper aus der ersten Halteposition in die zweite Halteposition verschoben wird, stoppt das Bauteil, insbesondere dessen (Translations-)Anschlag die Bewegung des Ventilsitzkörpers in der zweiten Halteposition.

Das separate Bauteil, insbesondere ein Deckel der Pumpe oder eine Zwischenplatte oder - gehäuse der Pumpe oder eine zweite Pumpe oder ein zweites Gehäuse, beispielsweise ein Gehäuse der zweiten Pumpe, kann an dem Pumpengehäuse, welches in Ausführungsformen den Fluidkanal bilden kann, oder der ersten Pumpe befestigt sein. Insbesondere kann dadurch, dass der Ventilsitzkörper in der zweiten Halteposition an dem separaten Bauteil anliegt, eine weitere Verschiebung des Ventilsitzkörpers in die zweite Richtung verhindert werden, auch dann, wenn sich beispielsweise aufgrund von sich ändernden Betriebstemperaturen der Förderpumpe oder des zu fördernden Fluids der Ventilsitzkörper und die Ventilsitzkörperaufnahme unterschiedlich stark ausdehnen, beispielsweise dann, wenn sie aus unterschiedlichen Materialien gebildet sind oder unterschiedliche Wärmeausdehnungskoeffizienten aufweisen.

Alternativ oder zusätzlich kann das separate Bauteil ein an dem Pumpengehäuse befestigtes Bauteil sein, welches separat von dem Pumpengehäuse und dem Ventilsitzkörper ist. Optional kann das Bauteil in dem Fluidkanal angeordnet und/oder an dem Fluidkanal, beispielsweise an einer Innenumfangswand des Fluidkanals, befestigt sein.

Eine überwindbar formschlüssige Verbindung kann beispielsweise dadurch gebildet werden, dass die Innenumfangswand eine Vertiefung und der Ventilsitzkörper einen Vorsprung, welcher in die Vertiefung eingreift, oder die Innenumfangswand einen Vorsprung und der Ventilsitzkörper eine Vertiefung, in welche der Vorsprung eingreift, aufweisen, wobei der Vorsprung durch Ausüben einer, insbesondere durch den Fluiddruck oder die Fluidströmung verursachten, Axialkraft auf den Ventilsitzkörper aus der Vertiefung herausgedrückt wird, beispielsweise indem sich der Vorsprung elastisch oder plastisch verformt oder der Vorsprung elastisch oder federnd angeordnet ist.

Eine überwindbare stoffschlüssige Verbindung kann beispielsweise dadurch gebildet werden, dass sich zwischen dem Ventilsitzkörper und der Innenwand ein Zusatzstoff, wie zum Beispiel ein Klebstoff, Fett oder Lot, befindet. Mithin kann die Verbindung eine Klebe- oder Lötverbindung sein, die so konfiguriert ist, dass sie durch die während des Betriebs auf den Schließkörper oder Ventilsitzkörper wirkende Axialkraft gelöst wird. Hierdurch kann der Ventilsitzkörper aus der ersten Halteposition in die zweite Halteposition verschoben werden.

Der Ventilsitzkörper kann in der zweiten Halteposition reibschlüssig an dem Innenumfang des Fluidkanals und/oder formschlüssig an dem Innenumfang des Fluidkanals oder dem von dem Innenumfang des Fluidkanals separaten Bauteils, beispielsweise von dem Bauteil, an dem sich der Ventilsitzkörper in die zweite Richtung abstützt, gehalten sein oder werden.

In Ausführungen kann ein Abschnitt des Ventilsitzkörpers aus dem Fluidkanal oder dem Pumpengehäuse herausragen, wenn der Ventilsitzkörper in der Ventilsitzkörperaufnahme angeordnet ist, insbesondere wenn sich der Ventilsitzkörper in seiner ersten Halteposition und/oder zweiten Halteposition befindet. Beispielsweise kann der Ventilsitzkörper in der zweiten Halteposition, optional auch in der ersten Halteposition teilweise in das Bauteil, welches an dem Gehäuse angeordnet oder befestigt ist, ragen.

In der zweiten Halteposition kann der Ventilsitzkörper zusätzlich reibschlüssig oder formschlüssig, beispielsweise an dem Innenumfang des Fluidkanals oder dem Innenumfang der Ventilsitzkörperaufnahme gehalten sein, um eine, insbesondere translatorische, Bewegung des Ventilsitzkörpers relativ zu dem Innenumfang in die zweite Richtung zu verhindern.

In Ausführungen kann der Ventilsitzkörper aus Kunststoff gebildet, insbesondere ein Spritzgussteil sein. Hierdurch kann der Ventilsitzkörper einfach und kostengünstig hergestellt werden und die an ihn gestellten konstruktiven funktionalen Anforderungen erfüllen.

Der Vorteil einer Anordnung, bei der der Ventilsitzkörper, insbesondere translatorisch, verschiebbar ist, ist, dass die Einpresskraft des Ventilsitzkörpers lediglich für den Transport der Vorrichtung, insbesondere der Förderpumpe, ausgelegt zu sein braucht, d.h. dass die Haltekraft nur für den Transport ausreichend zu sein braucht. Dadurch kann der Ventilsitzkörper u. U. ohne Hilfsmittel per Hand in den Fluidkanal eingesetzt werden. Vorzugsweise sind dadurch bei der Montage des Ventilsitzkörpers keine besonderen Maßnahmen erforderlich, um für jeden erdenklichen Betriebszustand (Druckverhältnisse, Temperaturen, Materialausdehnungen, Vibrationen, Erschütterungen etc.) eine positionssichere Verbindung herzustellen oder zu gewährleisten. Vorzugsweise stellt sich eine positionssichere Verbindung spätestens in der zweiten Halteposition des Ventilsitzkörpers ein. Eine positionssichere Verbindung wird vorteilhaft durch die zweite Halteposition gewährleistet oder sichergestellt.

Für die Montage wird der Schließkörper in den Fluidkanal eingelegt und anschließend wird der Ventilsitzkörper in den Fluidkanal, insbesondere in die Ventilsitzkörperaufnahme zur Bildung eines, insbesondere überwindbaren, Reibschlusses oder eines, insbesondere überwindbaren, Formschlusses oder eines, insbesondere überwindbaren, Stoffschlusses mit dem Innenumfang eingesetzt. Ein Herausfallen des Ventilsitzkörpers und des Schließkörpers wird durch den überwindbaren Reibschluss oder den überwindbaren Formschluss oder den überwindbaren Stoffschluss zwischen dem Innenumfang und dem Ventilsitzkörper verhindert. Somit lässt sich die Vorrichtung, insbesondere die Förderpumpe, einfach transportieren, auch dann, wenn an dem Gehäuse der Förderpumpe das separate Bauteil noch nicht angebracht oder befestigt ist. Andererseits lässt sich der Ventilsitzkörper einfach herstellen, da an ihn, was die Befestigung im Fluidkanal betrifft, nur geringe Maßhaltigkeitsanforderungen gestellt werden. Zudem lässt sich der Ventilsitzkörper einfach an dem Fluidkanal montieren, da er nicht einzurasten oder nicht unlösbar einzurasten braucht. Dadurch ist der Fluidkanal einfacher zu fertigen, da er keine Hinterschneidungen für eine Verrastung oder gar eine unlösbare Verrastung aufzuweisen braucht.

Beispielsweise kann das an dem Gehäuse oder Pumpengehäuse angebrachte, insbesondere befestigte Bauteil einen Anschlag, insbesondere Axial- oder Translationsanschlag, für den Ventilsitzkörper bilden. Der Ventilsitzkörper kann an dem separaten Bauteil, insbesondere axial oder mit einer Stirnfläche, anliegen, oder eine Position einnehmen, in welcher der Körper an dem Bauteil anliegt.

Beispielsweise kann zwischen dem Ventilsitzkörper und dem Bauteil ein Spalt gebildet sein, wenn der Ventilsitzkörper in seiner ersten Halteposition ist. Der Ventilsitzkörper kann um die Breite des Spalts aus der ersten Halteposition in die zweite Halteposition verschoben werden oder verschiebbar sein, und dann an dem Bauteil anschlagen.

Wie bereits erwähnt, kann das separate Bauteil ein Deckel der Pumpe oder eine Zwischenplatte oder -gehäuse der Pumpe oder eine zweite Pumpe oder ein zweites Gehäuse, beispielsweise ein Gehäuse einer zweiten Pumpe sein. Alternativ oder zusätzlich kann der Fluidkanal von einem Pumpengehäuse der ersten Pumpe oder der Hauptpumpe gebildet sein.

Dementsprechend kann an dem Pumpengehäuse, insbesondere der ersten Pumpe oder Hauptpumpe, eine zweite Pumpe, insbesondere Zusatzpumpe oder Hilfspumpe, angeordnet sein, welche einen Fluidkanal aufweist, der fluidkommunizierend mit dem Fluidkanal der ersten Pumpe derart verbunden ist, dass Fluid von der zweiten Pumpe durch die Ventilanordnung und den Fluidkanal des Pumpengehäuses der ersten Pumpe förderbar ist. Durch die Ventilanordnung kann somit bewirkt werden, dass Fluid von der zweiten Pumpe durch den Fluidkanal der ersten Pumpe förderbar ist, insbesondere zu einem Auslass hin, wobei eine Fluidströmung in die zweite Pumpe durch die Ventilanordnung verhindert werden kann.

In Weiterbildungen kann die erste Pumpe angepasst sein, Fluid über eine Förderkammer und einen die Förderkammer und einen Auslass verbindenden Auslasskanal zu dem Auslass zu fördern. Der Fluidkanal und der Auslasskanal können sich vereinigen, so dass Fluid von der Förderkammer über den Auslasskanal und/oder über den Fluidkanal der Ventilanordnung zu dem Auslass förderbar ist. Beispielsweise kann mit der zweiten Pumpe Fluid zu dem Auslass gefördert werden, wenn die erste Pumpe kein oder nicht ausreichend Fluid zum Auslass fördert. Wenn die erste Pumpe ausreichend Fluid zum Auslass fördert, kann die zweite Pumpe außer Betrieb gesetzt werden oder ihre Fördermenge verringert werden.

In Weiterbildungen kann zwischen der Förderkammer der ersten Pumpe und dem Auslass der ersten Pumpe ein Ventil, insbesondere ein Rückschlagventil, angeordnet sein, welches angepasst ist, eine Fluidströmung von der Förderkammer der ersten Pumpe zum Auslass der ersten Pumpe zuzulassen und in die entgegengesetzte Richtung zu blockieren. Der Fluidkanal und der Auslasskanal vereinigen sich idealerweise zwischen dem im Auslasskanal angeordneten Ventil und dem Auslass der ersten Pumpe.

Der Auslass der ersten Pumpe ist angepasst, fluidkommunizierend mit einem Fluidverbraucher, insbesondere einem der hierin genannten Fluidverbraucher, wie z. B. dem Verbrennungsmotor oder einem Getriebe, verbunden zu werden. Alternativ kann der Auslass mit dem Fluidverbraucher verbunden sein. Die erste Pumpe, insbesondere auch eine Kombination oder Einheit aus erster Pumpe und zweiter Pumpe, kann an einem Gehäuse des Fluidverbrauchers angeordnet, insbesondere befestigt, oder befestigbar sein. Beispielsweise kann zwischen dem Gehäuse des Fluidverbrauchers und dem Gehäuse der ersten Pumpe ein Dichtelement, wie z. B. ein Dichtring, angeordnet sein, welches den Auslass umfangsseitig umgibt und die Fluidverbindung zwischen dem Auslass der ersten Pumpe und dem Einlass des Fluidverbrauchers nach außen hin abdichtet.

Beispielsweise kann zwischen dem Bauteil, in welchem die Ventilanordnung angeordnet ist, und dem daran angeordneten Bauteil, in welches der Ventilsitzkörper ragt oder an welchem der Ventilsitzkörper anschlägt oder axial anliegt oder an welchem das Bauteil zentriert ist, ein Dichtelement, wie z. B. ein Dichtring, angeordnet sein, welches den Ventilsitzkörper umfangsseitig umgibt und die Fluidverbindung zwischen den beiden Bauteilen, insbesondere der ersten Pumpe bzw. deren Gehäuse und der zweiten Pumpe bzw. deren Gehäuse nach außen hin abdichtet.

In Weiterbildungen der Ventilanordnung kann diese ein, vorzugsweise vorgespanntes, Federelement, insbesondere eine mechanische Feder, insbesondere eine Wendel- oder Schraubenfeder, aufweisen, welches auf den Schließkörper wirkt, sich insbesondere an dem Schließkörper abstützt, und ihn gegen den Ventilsitz drückt.

Das Federelement kann sich beispielsweise mit einem Ende, insbesondere dem Ende, welches dem Ende entgegengesetzt ist, welches sich an dem Schließkörper abstützt, an dem Gehäuse abstützen. Alternativ kann sich das Federelement, beispielsweise mit einem Ende, insbesondere dem Ende, welches dem Ende entgegengesetzt ist, welches sich an dem Schließkörper abstützt, an einer Stirnwand eines Schließkörperhalters abstützen. Der Schließkörperhalter kann als separates Teil in den Fluidkanal eingesetzt sein oder werden.

Beispielsweise kann der Schließkörperhalter an dem Ventilsitzkörper befestigt sein und/oder der Ventilsitzkörper und der Schließkörperhalter können als Einheit verschiebbar sein. Alternativ kann der Schließkörperhalter an dem Ventilsitzkörper nicht befestigt sein und/oder der Ventilsitzkörper kann relativ zu dem Schließkörperhalter verschiebbar sein.

Die Stirnwand des Schließkörperhalters, an dem sich das Federelement abstützt, kann das Ende des Schließkörperhalters bilden, welches dem Ventilsitzkörper abgewandt ist.

Die Ventilanordnung kann beispielsweise einen Schließkörperhalter aufweisen, der den Schließkörper seitlich und/oder stirnseitig einfasst, und mindestens eine Öffnung aufweisen, welche so ausgebildet ist, dass sie von dem durch den Fluidkanal strömenden Fluid durchströmbar ist. Beispielsweise kann die seitliche Einfassung des Schließkörpers mindestens eine Öffnung, vorzugsweise mehrere Öffnungen bilden. Alternativ oder zusätzlich kann die Stirnseite, insbesondere die Stirnwand, an der sich das Federelement abstützt, mindestens eine Öffnung aufweisen. Der Schließkörper kann beispielsweise zwischen der Stirnwand und dem Ventilsitzkörper axial eingefasst sein, wobei er gegen die Kraft der optional vorhandenen Feder hin und her bewegbar sein kann. Bei einer Ventilanordnung, die federlos ist, kann der Schließkörper zwischen dem Ventilsitz und der Stirnwand frei oder im Wesentlichen frei hin- und herbewegt werden.

Der Schließkörperhalter kann den Schließkörper seitlich einfassen, insbesondere so führen, dass er im Wesentlichen translatorisch zwischen dem Ventilsitz und der Stirnwand bewegbar ist.

In bevorzugten Ausführungen kann der Fluidkanal, insbesondere die Innenwand des Fluidkanals, im Bereich des Schließkörperhalters mindestens eine Ausnehmung aufweisen, in welche die mindestens eine seitliche Öffnung des Schließkörperhalters mündet. Beispielsweise kann für die Öffnung eine Ausnehmung oder für mehrere Öffnungen eine Ausnehmung oder für mehrere Ausnehmungen eine Öffnung vorgesehen sein. Die mindestens eine Ausnehmung kann sich an der Stirnwand des Schließkörperhalters, welche das in der ersten Richtung weisende Ende des Schließkörperhalters bildet und/oder an der sich das Federelement abstützt, vorbeierstrecken und in einen Abschnitt des Fluidkanals, der auf der in die erste Richtung weisenden Seite der Stirnwand liegt, münden. Somit kann das beispielsweise von der zweiten Pumpe geförderte Fluid durch den Schließkörperhalter, insbesondere seine seitliche Öffnung in die Ausnehmung des Fluidkanals fließen und von dort an dem Schließkörperhalter vorbei in den Abschnitt des Fluidkanals fließen, der auf der in die erste Richtung weisenden Seite des Endes bzw. der Stirnwand des Schließkörperhalters liegt.

Der Schließkörper kann rotationssymmetrisch, wie z. B. kegel- oder kegelstumpfförmig, ausgebildet sein oder zumindest einen für die Anlage an dem Ventilsitz vorgesehenen Abschnitt bilden, dessen Außenfläche einen Teil einer Mantelfläche bildet. In einer vorteilhaften Ausführungsform ist der Schließkörper eine Kugel oder bildet zumindest einen für die Anlage an dem Ventilsitz vorgesehenen Abschnitt, dessen Außenfläche einen Teil einer Kugeloberfläche bildet.

Die Erfindung wurde anhand mehrerer bevorzugten Ausführungen und Beispiele beschrieben. Im Folgenden wird eine Ausführungsform der Erfindung anhand einer Figur beschrieben. Die dabei offenbarten Merkmale bilden je einzeln und in jeglicher Merkmalskombination den Gegenstand der Ansprüche vorteilhaft weiter.

Die Figur zeigt einen Schnitt durch ein Gehäuse 10 einer ersten Pumpe und ein daran angeordnetes Gehäuse 20 einer zweiten Pumpe.

Das Gehäuse 10 bildet einen Auslasskanal 12 und einen Fluidkanal 15. Der Auslasskanal 12 erstreckt sich von einer Förderkammer (nicht gezeigt) der ersten Pumpe bis zu einem Auslass 11, mit dem der Auslasskanal 12 an die Außenseite des Gehäuses 10 mündet. In der Förderkammer der ersten Pumpe ist ein Förderelement angeordnet, welches im Förderbetrieb relativ zu dem Gehäuse 10 gedreht wird und dadurch Fluid, insbesondere Öl, über den Auslasskanal 12 zu dem Auslass 11 fördert.

Der Fluidkanal 15 vereinigt sich mit dem Auslasskanal 12, bzw. mündet in den Auslasskanal 12, in dem gezeigten Beispiel zwischen einem im Auslasskanal 12 angeordneten Ventil 200 und dem Auslass 11. Dadurch werden die Fluidströme durch den Auslasskanal 12 und den Fluidkanal 15 zu dem Auslass 11 gefördert.

An der ersten Pumpe ist eine zweite Pumpe angeordnet. Die erste Pumpe kann beispielsweise als Hauptpumpe dienen, wobei die zweite Pumpe als Hilfs- oder Zusatzpumpe dienen kann. Die zweite Pumpe weist ein Gehäuse 20 auf, welches an dem Gehäuse 10 der ersten Pumpe angeordnet, beispielsweise daran befestigt ist. Die zweite Pumpe, insbesondere das Gehäuse 20, weist einen Fluidkanal 21 auf, der in den Fluidkanal 15 des Gehäuses 10 mündet. Dadurch wird bewirkt, dass von der zweiten Pumpe gefördertes Fluid durch den Fluidkanal 21 und den Fluidkanal 15 zu dem Auslass 11 gefördert wird. Die zweite Pumpe kann eine Förderkammer (nicht gezeigt) aufweisen, in der ein drehbares Förderelement angeordnet ist. Das Förderelement dreht sich im Betrieb und fördert Fluid, insbesondere Öl, über den Fluidkanal 21 in den Fluidkanal 15.

Die erste Pumpe bzw. das erste Gehäuse 10 umfasst eine Ventilanordnung 100, welche angepasst ist, eine Fluidströmung in eine erste Richtung (siehe Pfeilrichtung) zuzulassen und in eine zweite, der ersten Richtung entgegengesetzte Richtung zu blockieren. Mithin lässt die Ventilanordnung 100 eine Fluidströmung von der zweiten Pumpe zum Auslass 11 hin zu und vom Auslass 11 zur zweiten Pumpe hin nicht zu.

Die Ventilanordnung 100 umfasst neben dem Fluidkanal 15 einen Ventilsitz 111, der von einem ringförmigen Ventilsitzkörper 110 gebildet ist, und einen in dem Fluidkanal 15 angeordneten, in diesem Beispiel kugelförmigen, Schließkörper 120. Die Ventilanordnung 100 umfasst in dem gezeigten Beispiel ferner ein Federelement 130, welches als Wendelfeder bzw. Schraubenfeder ausgestaltet ist und als Druckfeder wirkt. Das vorzugsweise vorgespannte Federelement 130 stützt sich mit einem Ende an dem Schließkörper 120 und mit dem anderen Ende an einer Stirnwand 143 eines Schließkörperhalters 140 ab. In Ausführungsformen ohne Schließkörperhalter 140 kann sich das Ende der Feder beispielsweise direkt an einer Struktur des Fluidkanals 15 oder dem Gehäuse 10 abstützen.

Die vorgespannte Feder 130 drückt den Schließkörper 120 gegen den Ventilsitz 111. Der Schließkörper 120 bildet mit dem Ventilsitz 111 einen Dichtspalt. Der Ventilsitz 111 ist eine Fläche, die komplementär zu der Außenfläche des Schließkörpers 120 ausgebildet ist. Der Ventilsitzkörper 110 bildet einen Durchgang 113, der von dem zu fördernden Fluid durchströmbar ist.

Der Schließkörperhalter 140 fasst umfangsseitig einen Aufnahmeraum ein, in dem der Schließkörper 120 und das Federelement 130 angeordnet sind. Der Schließkörperhalter 140 weist eine Stirnwand 143 auf, welche das in die erste Richtung weisende Ende des Schließkörperhalters 140 bildet und als Abstützung für das Federelement 130 dient. Der Schließkörper 120 wird von einer seitlichen Einfassung 141, welche den Aufnahmeraum einfasst oder umgibt, geführt, so dass der Schließkörper 120 im Wesentlichen nur translatorisch zwischen der Stirnwand 143 und dem Ventilsitzkörper 110 bewegbar ist. Die seitliche Einfassung 141 des Schließkörperhalters 140 weist mindestens eine Öffnung 142 auf, welche in eine Ausnehmung 18 des Fluidkanals 15 mündet, um dem zu fördernden Fluid zu ermöglichen, über die mindestens eine Öffnung 142, insbesondere radial, aus dem Schließkörperhalter 140 auszutreten und über die mindestens eine Ausnehmung 18 an dem in die erste Fließrichtung weisenden Ende des Schließkörperhalters 140 vorbei in einen Abschnitt des Fluidkanals 15, der auf der in die erste Richtung weisenden Seite des Schließkörperhalters 140 liegt, gefördert zu werden. Dementsprechend kann der Fluidkanal 15 im Bereich des Schließkörperhalters 140 die mindestens eine Ausnehmung 18 aufweisen, in welche die mindestens eine seitliche Öffnung 142 mündet und welche sich an der Stirnwand 143 des Schließkörperhalters 140 vorbei erstreckt und wieder in einen Abschnitt des Fluidkanals 15 mündet, der auf der in die erste Richtung weisenden Seite der Stirnwand 143 liegt.

Alternativ oder zusätzlich kann die Stirnwand 143 eine Öffnung 144 aufweisen, durch welche Fluid aus dem Aufnahmeraum in den Abschnitt des Fluidkanals gefördert werden kann, der auf der in die erste Richtung weisenden Seite der Stirnwand 143 liegt. Die Öffnung 144 kann beispielsweise von dem Federelement 130 umgeben sein. Insbesondere kann sich das Federelement 130 in einem Bereich der Stirnwand 143 abstützen, der zwischen der Öffnung 144 und der seitlichen Einfassung 142 liegt.

Der Schließkörperhalter 140 kann an dem Ventilsitzkörper 110 zumindest axial verschiebefest befestigt sein. Alternativ können der Schließkörperhalter 140 und der Ventilsitzkörper 110 relativ zueinander, beispielsweise translatorisch, verschiebbar sein.

Der Ventilsitzkörper 110 wird von einem Innenumfang des Fluidkanals 15, insbesondere einer Ventilsitzkörperaufnahme 13, gehalten. Der Ventilsitzkörper 110 wird an seinem Außenumfang 112 von dem Innenumfang des Fluidkanals 15 bzw. der Ventilsitzkörperaufnahme 13 gehalten, in diesem Beispiel überwindbar reibschlüssig gehalten. Alternativ oder zusätzlich kann der Ventilsitzkörper 110 überwindbar formschlüssig und/oder überwindbar stoffschlüssig gehalten werden. In der in der Figur gezeigten Position ist der Ventilsitzkörper 110 in einer ersten Halteposition angeordnet. Zwischen der in die zweite Richtung weisenden Stirnfläche 114 des Ventilsitzkörpers 110 und einem Axialanschlag 22, insbesondere einer Axialanschlagfläche, des Gehäuses 20 ist ein Spalt 23 mit einer Spaltbreite gebildet. Die erste Halteposition kann der Ventilsitzkörper 110 bei der Montage der Ventilanordnung 100 einnehmen.

Der Ventilsitzkörper 110 kann aus der ersten Halteposition, in der er überwindbar reibschlüssig und/oder überwindbar formschlüssig und/oder überwindbar stoffschlüssig an der Innenwand der Ventilsitzkörperaufnahme 13 gehalten wird, in die zweite Richtung, d. h. entgegen der Pfeilrichtung, in eine zweite Halteposition, in der eine Bewegung des Ventilsitzkörpers 110 in die zweite Richtung blockiert ist, verschoben werden. Insbesondere ist der Ventilsitzkörper 110 um die Spaltbreite des Spalts 23 in die zweite Richtung verschiebbar. In der zweiten Halteposition schlägt oder liegt die Stirnfläche 114 an dem Axialanschlag 22 des Gehäuses 20 an. Somit wird der Ventilsitzkörper in der zweiten Halteposition formschlüssig von dem Gehäuse 20, welches separat von der Innenwand des Fluidkanals 15 bzw. des Gehäuses 10 ist, gehalten. Eine weitere Verschiebung des Ventilsitzkörpers 110 in die zweite Richtung ist dann nicht mehr möglich.

Der von dem Gehäuse 10 separate Ventilsitzkörper 110 kann daher so ausgebildet sein, dass er lediglich mit einer Kraft in der Ventilsitzkörperaufnahme 13 angeordnet zu werden braucht, die das Herausfallen des Ventilsitzkörpers 110 beispielsweise in einem Zustand, in dem das Gehäuse 20 noch nicht an dem Gehäuse 10 angeordnet ist, verhindert. Wenn das Gehäuse 20 an dem Gehäuse 10 angeordnet oder befestigt ist, können beispielsweise während des Betriebs Kräfte auf den Ventilsitzkörper 110 wirken, die ihn aus der ersten Halteposition in die zweite Halteposition verschieben können. Bei der Montage muss daher nur darauf geachtet werden, dass der Ventilsitzkörper 110 während des Transports zur Endmontage, bei der das Gehäuse 20 an dem Gehäuse 10 angeordnet wird, am Gehäuse 10 in der Ventilsitzkörperaufnahme 13 verbleibt. Bei der Montage, d. h. beim Einbringen des Ventilsitzkörpers 110 in die Ventilsitzkörperaufnahme 13 braucht daher nicht darauf geachtet zu werden, dass der Ventilsitzkörper 110 für alle Betriebszustände positionssicher angeordnet ist. Alternativ zu einer solchen überwindbar formschlüssigen und/oder überwindbar reibschlüssigen und/oder überwindbaren stoffschlüssigen Anordnung des Ventilsitzkörpers 110 in der Ventilsitzkörperaufnahme 13 kann der Ventilsitzkörper 110 eingepresst, eingeklebt, gelötet oder form- und/oder reibschlüssig fest in der Ventilsitzkörperaufnahme 13 angeordnet werden.

Die für alle Betriebszustände positionssichere Anordnung des Ventilsitzkörpers 110 wird erst im endmontierten Zustand, d. h. wenn das Gehäuse 20 an dem Gehäuse 10 befestigt ist, erreicht. Durch den Axialanschlag 22 für den Ventilsitzkörper 110 kann eine besonders zuverlässige Anordnung des Ventilsitzkörpers 110 realisiert werden, da auch ein vermeintlich für alle Betriebszustände positionssicher eingepresster Ventilsitzkörper 110, insbesondere durch unterschiedliche Wärmeausdehnungskoeffizienten des Ventilsitzkörpers und des Gehäuses 10, sich verschieben kann.

Wie die Figur ferner zeigt, ragt der in der Ventilsitzkörperaufnahme 13 angeordnete Ventilsitzkörper 110 mit einem Abschnitt aus dem Gehäuse 10. Der Abschnitt weist einen Außenumfang 112, insbesondere eine Außenumfangsfläche 112, auf. Das Gehäuse 20 (oder ein anderes Bauteil, wie z. B. ein Deckel oder allgemein eine Pumpe) ist an dem aus dem Gehäuse 10 ragenden Abschnitt des Ventilsitzkörpers 110 zentriert. Das Gehäuse 20 weist einen Innenumfang 24, insbesondere Innenumfangsfläche 24, auf, welche den Außenumfang des Ventilsitzkörpers 110 umgibt und daran zentriert ist. Insbesondere liegen die Außenumfangsfläche 112 und die Innenumfangsfläche 24 aneinander an. Der aus dem Gehäuse 10 ragende Abschnitt des Ventilsitzkörpers 110 ragt in das Gehäuse 20 hinein, welches hierfür eine Ausnehmung mit der Innenumfangsfläche 24 und dem Axialanschlag 22 aufweist. Der Axialanschlag 22 wird durch eine Stirnwand der Ausnehmung gebildet. Die Stirnwand umgibt den zur Ventilanordnung 100 weisenden Auslass des Fluidkanals 21, insbesondere ringförmig.

Dadurch, dass der Ventilsitzkörper 110 aus der Ventilsitzkörperaufnahme 13 bzw. dem Gehäuse 10 herausragt, kann er zusätzlich als Positionier- oder Zentrierelement für das Gehäuse 20 dienen, wodurch das Gehäuse 20 an dem oder durch den Ventilsitzkörper 110 zentriert oder positioniert werden kann. Der Vorteil hierdurch ist, dass dadurch ein zusätzliches Zentrierelement, wie z. B. eine Zentrierhülse, entfallen kann.

Der technische Vorteil der in der Figur dargestellten Ausführung kann zusammengefasst wie folgt angegeben werden:
- lediglich transportsichere Anordnung des Ventilsitzkörpers 110 in der Ventilsitzkörperaufnahme 13;
- Anschlag 22 für den Ventilsitzkörper 110 in dem vom Gehäuse 10 separaten Gehäuse 20;
- der Ventilsitzkörper 110 ragt aus der Ventilsitzkörperaufnahme 13 heraus, um ein Positionier- oder Zentrierelement für ein separates Bauteil, wie z. B. das Gehäuse 20 zu bilden.

Zwischen dem Gehäuse 10 und dem Gehäuse 20 kann ein Dichtelement (nicht gezeigt), wie z. B. eine Dichtscheibe oder ein Dichtring, angeordnet sein, welcher den Ventilsitzkörper 110 umgibt. Dadurch wird der Übergang von dem Fluidkanal 21 in den Fluidkanal 15 nach außen hin abgedichtet.

Zwischen dem Gehäuse 10 und einem Bauteil, an dem das Gehäuse 10 befestigt ist, wie z. B. einem Getriebegehäuse (nicht gezeigt), kann ein Dichtelement (nicht gezeigt), wie z. B. eine Dichtscheibe oder ein Dichtring, angeordnet sein, welches den Auslass 11 umgibt und den Übergang des Kanals 12 in einen Kanal, der in Übereinstimmung mit dem Auslasskanal 12 oder dem Auslass 11 angeordnet ist und von dem beispielhaften Getriebegehäuse gebildet wird, nach außen hin abdichtet.

In dem Auslasskanal 12 ist ein Ventil 200, insbesondere Rückschlagventil, angeordnet. Das Rückschlagventil 200 weist einen Ventilsitzkörper 210 auf, der einen Ventilsitz 211 für einen Schließkörper 220 bildet. Der Ventilsitzkörper 210 ist ringförmig und weist einen Durchgang 213 auf. An dem Ventilsitzkörper 210 ist ein Schließkörperhalter 240 angeordnet, der axialfest mit dem Ventilsitzkörper 210 gefügt ist. Der Schließkörperhalter 240 weist ein Seitenelement 241 auf, welches einen Aufnahmeraum für den Schließkörper 220 seitlich einfasst. Ferner weist der Schließkörperhalter 240 einen Abstützabschnitt 243 auf, der gleichzeitig das in die zweite Richtung weisende Ende des Ventils 200 bildet. Der Schließkörperhalter 240 weist mindestens eine Öffnung 242 auf, welche den Aufnahmeraum des Schließkörperhalters 240 fluidkommunizierend mit dem zwischen dem Auslass 11 und dem Ventil 200 liegenden Abschnitt des Auslasskanals 12 verbindet. Das Ventil 200 weist ein Federelement 230, insbesondere eine Feder, die als Wendelfeder ausgestaltet und als Druckfeder wirkt, auf. Das Federelement 230 stützt sich mit einem Ende an dem Schließkörper 220 und mit seinem anderen Ende an dem Abstützabschnitt 243 ab und drückt den Schließkörper 220 gegen den Ventilsitz 211.

Der Schließkörper 220 ist in dem gezeigten Beispiel rotationssymmetrisch und umfasst einen Schaft, der in einer Führung, welche von dem Schließkörperhalter 240 gebildet wird, axial oder translatorisch verschiebbar ist (siehe Pfeilrichtung). Wenn der Fluiddruck in dem zwischen dem Ventil 200 und der Förderkammer der ersten Pumpe befindlichen Abschnitt des Auslasskanals größer ist als in dem zwischen dem Auslass 11 und dem Ventil 200 liegenden Abschnitt des Auslasskanals 12 und insbesondere so groß ist, dass die auf den Schließkörper 220 wirkende Kraft die Vorspannkraft des Federelements 230 überwindet, hebt der Schließkörper 220 von dem Ventilsitz 211 ab, wodurch Fluid von der Förderkammer der ersten Pumpe durch das Ventil 200 und den Auslasskanal 12 zu dem Auslass 11 gefördert werden kann. Fällt der Druck in dem zwischen Förderkammer und Schließkörper 220 liegenden Abschnitt des Auslasskanals 12 ab, so dass die auf den Schließkörper 220 wirkende Kraft geringer ist als die Vorspannkraft des Federelements 230, drückt das Federelement 230 den Schließkörper 220 gegen den Ventilsitz 211, wodurch ein Rückfluss von Fluid in die zweite Richtung, d. h. zu der Förderkammer der ersten Pumpe hin verhindert wird.

Durch die in der Figur gezeigte Anordnung ist es möglich, Fluid entweder von der ersten Pumpe zum Auslass 11 oder von der zweiten Pumpe zum Auslass 11 oder sowohl von der ersten Pumpe als auch von der zweiten Pumpe (gleichzeitig) zum Auslass 11 zu fördern.

### Bezugszeichenliste

- 1: Pumpenanordnung

- 10: Gehäuse der ersten Pumpe
- 11: Auslass
- 12: Auslasskanal
- 13: Ventilsitzkörperaufnahme
- 15: Fluidkanal
- 18: Ausnehmung

- 20: Gehäuse der zweiten Pumpe
- 21: Fluidkanal
- 22: Axialanschlag
- 23: Spalt
- 24: Innenumfang / Innenumfangsfläche

- 100: Ventilanordnung

- 110: Körper / Ventilsitzkörper
- 111: Ventilsitz
- 112: Außenumfang / Außenumfangsfläche
- 113: Durchgang
- 114: Stirnfläche

- 120: Schließkörper

- 130: Federelement

- 140: Schließkörperhalter
- 141: seitliche Einfassung
- 142: Öffnung der seitlichen Einfassung
- 143: Stirnwand
- 144: Öffnung der Stirnwand

- 200: Ventil

- 210: Ventilsitzkörper
- 211: Ventilsitz
- 213: Durchgang

- 220: Schließkörper

- 230: Feder

- 240: Halter
- 241: Seitenelement
- 242: Öffnung
- 243: Abstützabschnitt

## Patentansprüche

1. Vorrichtung, umfassend eine erste Pumpe und eine Ventilanordnung (100), welche angepasst ist, eine Fluidströmung zuzulassen und zu blockieren, wobei die Ventilanordnung (100) umfasst:
- einen von einem Pumpengehäuse (10) der ersten Pumpe gebildeten Fluidkanal (15),
- einen Ventilsitz (111) und
- einen in dem Fluidkanal (15) angeordneten Schließkörper (120), wobei die Ventilanordnung (100) konfiguriert ist, wenn der Schließkörper (120), von dem Ventilsitz (111) abgehoben ist, eine Fluidströmung zuzulassen, und, wenn der Schließkörper (120) an dem Ventilsitz (111) anliegt, eine Fluidströmung zu verhindern,
- wobei der Ventilsitz (111) von einem in oder an dem Fluidkanal (15) angeordneten Ventilsitzkörper (110) gebildet ist,
**dadurch gekennzeichnet, dass**
- die Vorrichtung eine zweite Pumpe, die an dem Pumpengehäuse (10) der ersten Pumpe angeordnet ist, und ein Bauteil (20), das an dem Pumpengehäuse (10) angeordnet ist, umfasst und
- die zweite Pumpe einen Fluidkanal (21) aufweist, der fluidkommunizierend mit dem Fluidkanal (15) der ersten Pumpe derart verbunden ist, dass Fluid von der zweiten Pumpe durch die Ventilanordnung (100) förderbar ist, und der Ventilsitzkörper (110) aus dem Pumpengehäuse (10) ragt, wobei ein Abschnitt des Ventilsitzkörpers (110) in das Bauteil (20) ragt und/oder das Bauteil (20) an dem oder durch den Ventilsitzkörper (110) zentriert ist.

2. Vorrichtung nach dem vorhergehenden Anspruch, **dadurch gekennzeichnet, dass** das Bauteil (20) ein Gehäuse der zweiten Pumpe ist.

3. Vorrichtung nach einem der vorhergehenden Ansprüche, **dadurch gekennzeichnet, dass** das Bauteil (20) eine Innenumfangswand aufweist, welche einen Außenumfang (112) des Ventilsitzkörpers (110) umgibt und insbesondere daran zentriert ist.

4. Vorrichtung nach einem der vorhergehenden Ansprüche, **dadurch gekennzeichnet, dass** der Ventilsitzkörper (110), insbesondere überwindbar, reibschlüssig und/oder, insbesondere überwindbar, formschlüssig und/oder, insbesondere überwindbar, stoffschlüssig an einem Innenumfang des Fluidkanals (15) gehalten ist.

5. Vorrichtung nach einem der vorhergehenden Ansprüche, **dadurch gekennzeichnet, dass** der Ventilsitzkörper (110) relativ zu dem Fluidkanal (15) bewegbar, insbesondere translatorisch, verschiebbar, ist.

6. Vorrichtung nach einem der vorhergehenden Ansprüche, **dadurch gekennzeichnet, dass** der Ventilsitzkörper (110) aus einer ersten Halteposition, in der er überwindbar reibschlüssig oder überwindbar formschlüssig an dem Innenumfang des Fluidkanals (15) gehalten ist, in die zweite Richtung in eine zweite Halteposition, in der eine Bewegung des Ventilsitzkörpers (110) in die zweite Richtung blockiert ist, verschiebbar ist.

7. Vorrichtung nach dem vorhergehenden Anspruch, **dadurch gekennzeichnet, dass** der Ventilsitzkörper (110) in der zweiten Halteposition reibschlüssig an dem Innenumfang des Fluidkanals (15) und/oder formschlüssig an dem Innenumfang des Fluidkanals (15) oder dem von der Innenumfangswand des Fluidkanals (15) separaten Bauteil, beispielsweise von dem Bauteil (20), an dem sich der Ventilsitzkörper (110) in die zweite Richtung abstützt, gehalten wird.

8. Vorrichtung nach einem der vorhergehenden Ansprüche, **dadurch gekennzeichnet, dass** der Ventilsitzkörper (110) an dem separaten Bauteil (20) anliegt oder eine Position einnehmen kann, in welcher der Ventilsitzkörper (110) an dem Bauteil (20) anliegt.

9. Vorrichtung nach einem der vorhergehenden Ansprüche, **dadurch gekennzeichnet, dass** die erste Pumpe angepasst ist, Fluid über eine Förderkammer und einen die Förderkammer und einen Auslass (11) verbindenden Auslasskanal (12) zu dem Auslass (11) zu fördern, wobei der Fluidkanal (15) und der Auslasskanal (12) sich vereinigen, so dass Fluid von der Förderkammer über den Auslasskanal (12) und/oder den Fluidkanal (15) der Ventilanordnung (100) zu dem Auslass (11) förderbar ist.

10. Vorrichtung nach dem vorhergehenden Anspruch, **dadurch gekennzeichnet, dass** zwischen der Förderkammer und dem Auslass (11) ein Ventil (200) angeordnet ist, welches angepasst ist, eine Fluidströmung von der Förderkammer zum Auslass (11) zuzulassen und in die entgegengesetzte Richtung zu blockieren, wobei der Fluidkanal (15) und der Auslasskanal (12) sich zwischen dem Ventil (200) und dem Auslass (11) vereinigen.

11. Vorrichtung nach einem der vorhergehenden Ansprüche, **dadurch gekennzeichnet, dass** ein Auslass (11) der ersten Pumpe fluidkommunizierend mit einem Fluidverbraucher, insbesondere einem Getriebe, verbunden ist, wobei bevorzugt ist, dass die erste Pumpe an einem Gehäuse des Fluidverbrauchers angeordnet oder befestigbar oder befestigt ist.

12. Vorrichtung nach einem der vorhergehenden Ansprüche, **dadurch gekennzeichnet, dass** der Schließkörper (120) rotationssymmetrisch oder kugelförmig ist.

13. Vorrichtung nach einem der vorhergehenden Ansprüche, **dadurch gekennzeichnet, dass** der Ventilsitzkörper (110) ringförmig ist.

## Claims

1. A device comprising a first pump and a valve array (100) which is adapted to allow and block a fluid flow, wherein the valve array (100) comprises:
- a fluid channel (15) formed by a pump housing (10) of the first pump;
- a valve seating (111); and
- a closing body (120) which is arranged in the fluid channel (15), wherein the valve array (100) is configured to allow a fluid flow when the closing body (120) is lifted off the valve seating (111), and to prevent a fluid flow when the closing body (120) rests against the valve seating (111),
- wherein the valve seating (111) is formed by a valve seating body (110) which is arranged in or on the fluid channel (15),
**characterised in that**
- the device comprises a second pump, which is arranged on the pump housing (10) of the first pump, and a component part (20) which is arranged on the pump housing (10), and
- the second pump comprises a fluid channel (21) which is connected in fluid communication with the fluid channel (15) of the first pump, such that fluid can be delivered from the second pump through the valve array (100), and the valve seating body (110) protrudes out of the pump housing (10), wherein a portion of the valve seating body (110) protrudes into the component part (20) and/or the component part (20) is centred on or by the valve seating body (110).

2. The device according to the preceding claim, **characterised in that** the component part (20) is a housing (10) of the second cooling device pump.

3. The device according to any one of the preceding claims, **characterised in that** the component part (20) comprises an inner circumferential wall which surrounds an outer circumference (112) of the valve seating body (110) and is in particular centred on it.

4. The device according to any one of the preceding claims, **characterised in that** the valve seating body (110) is held on an inner circumference of the fluid channel (15) in a frictional fit, in particular a surmountable frictional fit, and/or in a positive fit, in particular a surmountable positive fit, and/or in a material fit, in particular a surmountable material fit.

5. The device according to any one of the preceding claims, **characterised in that** the valve seating body (110) can be moved, in particular translationally shifted, relative to the fluid channel (15).

6. The device according to any one of the preceding claims, **characterised in that** the valve seating body (110) can be shifted in a second direction from a first holding position, in which it is held on the inner circumference of the fluid channel (15) in a surmountable frictional fit or in a surmountable positive fit, to a second holding position in which a movement of the valve seating body (110) in the second direction is blocked.

7. The device according to the preceding claim, **characterised in that** in the second holding position, the valve seating body (110) is held in a frictional fit on the inner circumference of the fluid channel (15) and/or held in a positive fit on the inner circumference of the fluid channel (15) or on a component part which is separate from the inner circumferential wall of the fluid channel (15), for example the component part (20) on which the valve seating body (110) is supported in the second direction.

8. The device according to any one of the preceding claims, **characterised in that** the valve seating body (110) rests against the separate component part (20) or can assume a position in which the valve seating body (110) rests against the component part (20).

9. The device according to any one of the preceding claims, **characterised in that** the first pump is adapted to deliver fluid to an outlet (11) via a delivery chamber and an outlet channel (12) which connects the delivery chamber and the outlet (11), wherein the fluid channel (15) and the outlet channel (12) merge, such that fluid can be delivered from the delivery chamber to the outlet (11) via the outlet channel (12) and/or the fluid channel (15) of the valve array (100).

10. The device according to the preceding claim, **characterised in that** a valve (200) which is arranged between the delivery chamber and the outlet (11) is adapted to allow a fluid flow from the delivery chamber to the outlet (11) and to block it in the opposite direction, wherein the fluid channel (15) and the outlet channel (12) merge between the valve (200) and the outlet (11).

11. The device according to any one of the preceding claims, **characterised in that** an outlet (11) of the first pump is connected in fluid communication with a fluid consumer, in particular a transmission, wherein the first pump is preferably arranged on a housing of the fluid consumer or is or can be fastened to a housing of the fluid consumer.

12. The device according to any one of the preceding claims, **characterised in that** the closing body (120) is rotationally symmetrical or spherical.

13. The device according to any one of the preceding claims, **characterised in that** the seating body (110) is annular.

## Revendications

1. Dispositif comprenant une première pompe et un ensemble de soupape (100) adapté pour permettre et bloquer un écoulement de fluide, l'ensemble de soupape (100) comprenant :
- un canal de fluide (15) formé par un boîtier de pompe (10) de la première pompe ;
- un siège de soupape (111) ; et
- un corps de fermeture (120) disposé dans le canal de fluide (15), l'ensemble de soupape (100) étant configuré pour permettre un écoulement de fluide lorsque le corps de fermeture (120) est soulevé du siège de soupape (111) et pour empêcher un écoulement de fluide lorsque le corps de fermeture (120) s'applique contre le siège de soupape (111),
- le siège de soupape (111) étant formé par un corps de siège de soupape (110) disposé dans ou sur le canal de fluide (15),
**caractérisé en ce que**
- le dispositif comprend une seconde pompe disposée sur le boîtier de pompe (10) de la première pompe, et un composant (20) disposé sur le boîtier de pompe (10), et
- la seconde pompe comporte un canal de fluide (21) relié en communication fluidique au canal de fluide (15) de la première pompe de telle sorte que du fluide puisse être refoulé depuis la seconde pompe à travers l'ensemble de soupape (100), et le corps de siège de soupape (110) dépasse le corps de pompe (10), une partie du corps de siège de soupape (110) faisant saillie dans le composant (20) et / ou le composant (20) étant centré sur ou par le corps de siège de soupape (110).

2. Dispositif selon la revendication précédente, **caractérisé en ce que** le composant (20) est un boîtier de la seconde pompe.

3. Dispositif selon l'une quelconque des revendications précédentes, **caractérisé en ce que** le composant (20) comporte une paroi circonférentielle intérieure qui entoure une circonférence extérieure (112) du corps de siège de soupape (110) et est en particulier centrée sur ladite circonférence extérieure (112).

4. Dispositif selon l'une quelconque des revendications précédentes, **caractérisé en ce que** le corps de siège de soupape (110) est maintenu sur une circonférence intérieure du canal de fluide (15) par liaison de friction, en particulier par liaison de friction surmontable, et / ou par liaison de formes complémentaires, en particulier par liaison de formes complémentaires surmontable, et / ou par liaison de matière, en particulier par liaison de matière surmontable.

5. Dispositif selon l'une quelconque des revendications précédentes, **caractérisé en ce que** le corps de siège de soupape (110) est mobile, en particulier déplaçable en translation, par rapport au canal de fluide (15).

6. Dispositif selon l'une quelconque des revendications précédentes, **caractérisé en ce que** le corps de siège de soupape (110) est déplaçable en seconde direction depuis une première position de maintien, dans laquelle il est maintenu sur la circonférence intérieure du canal de fluide (15) par liaison de friction surmontable ou par liaison de formes complémentaires surmontable, vers une seconde position de maintien dans laquelle est bloqué un mouvement du corps de siège de soupape (110) en seconde direction.

7. Dispositif selon la revendication précédente, **caractérisé en ce que** le corps de siège de soupape (110) dans la seconde position de maintien est maintenu par liaison de friction sur la circonférence intérieure du canal de fluide (15) et / ou par liaison de formes complémentaires sur la circonférence intérieure du canal de fluide (15) ou sur le composant (20) séparé de la paroi circonférentielle intérieure du canal de fluide (15), par exemple le composant (20) sur lequel s'appuie le corps de siège de soupape (110) en seconde direction.

8. Dispositif selon l'une quelconque des revendications précédentes, **caractérisé en ce que** le corps de siège de soupape (110) s'applique contre le composant séparé (20) ou peut prendre une position dans laquelle le corps de siège de soupape (110) s'applique contre le composant (20).

9. Dispositif selon l'une quelconque des revendications précédentes, **caractérisé en ce que** la première pompe est adaptée pour refouler du fluide vers une sortie (11) par l'intermédiaire d'une chambre de refoulement et d'un canal de sortie (12) reliant la chambre de refoulement et la sortie (11), le canal de fluide (15) et le canal de sortie (12) confluant de sorte que du fluide peut être refoulé depuis la chambre de refoulement vers la sortie (11) par l'intermédiaire du canal de sortie (12) et / ou du canal de fluide (15) de l'ensemble de soupape (100).

10. Dispositif selon la revendication précédente, **caractérisé en ce qu'**une soupape (200) est disposée entre la chambre de refoulement et la sortie (11), la soupape (200) étant adaptée pour permettre un écoulement de fluide depuis la chambre de refoulement vers la sortie (11) et pour le bloquer en direction opposée, le canal de fluide (15) et le canal de sortie (12) confluant entre la soupape (200) et la sortie (11).

11. Dispositif selon l'une quelconque des revendications précédentes, **caractérisé en ce qu'**une sortie (11) de la première pompe est reliée en communication fluidique à un consommateur de fluide, en particulier à une transmission, la première pompe étant de préférence disposée sur un boîtier du consommateur de fluide ou étant fixée ou pouvant être fixée à un boîtier du consommateur de fluide.

12. Dispositif selon l'une quelconque des revendications précédentes, **caractérisé en ce que** le corps de fermeture (120) est à symétrie de rotation ou est sphérique.

13. Dispositif selon l'une quelconque des revendications précédentes, **caractérisé en ce que** le corps de siège de soupape (110) est annulaire.
